(19) **Europäisches Patentamt / European Patent Office / Office européen des brevets**

(11) **EP 4 214 532 B1**

(12) **FASCICULE DE BREVET EUROPEEN**

(45) Date de publication et mention de la délivrance du brevet:
**19.06.2024 Bulletin 2024/25**

(21) Numéro de dépôt: **21778423.0**

(22) Date de dépôt: **17.09.2021**

(51) Classification Internationale des Brevets (IPC):
**G01S 5/02** *(2010.01)* **G01S 19/20** *(2010.01)*

(52) Classification Coopérative des Brevets (CPC):
**G01S 5/02; G01S 19/20**

(86) Numéro de dépôt international:
**PCT/EP2021/075664**

(87) Numéro de publication internationale:
**WO 2022/058527 (24.03.2022 Gazette 2022/12)**

(54) **PROCÉDÉ DE CONTRÔLE D'INTÉGRITÉ DU RECALAGE SUR UNE PLURALITÉ D'AMERS, PRODUIT PROGRAMME D'ORDINATEUR ET DISPOSITIF DE CONTRÔLE D'INTÉGRITÉ ASSOCIÉS**

VERFAHREN ZUR ÜBERPRÜFUNG DER INTEGRITÄT DER KALIBRIERUNG AN MEHREREN LANDMARKEN, ZUGEHÖRIGES COMPUTERPROGRAMMPRODUKT UND ZUGEHÖRIGE INTEGRITÄTSPRÜFVORRICHTUNG

METHOD FOR CHECKING THE INTEGRITY OF CALIBRATION ON A PLURALITY OF LANDMARKS, ASSOCIATED COMPUTER PROGRAM PRODUCT AND ASSOCIATED INTEGRITY CHECKING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.09.2020 FR 2009417**

(43) Date de publication de la demande:
**26.07.2023 Bulletin 2023/30**

(73) Titulaire: **THALES**
**92400 Courbevoie (FR)**

(72) Inventeur: **HEURGUIER, Dominique**
**92622 GENNEVILLIERS CEDEX (FR)**

(74) Mandataire: **Lavoix**
**2, place d'Estienne d'Orves**
**75441 Paris Cedex 09 (FR)**

(56) Documents cités:
**EP-A1- 2 299 287    US-A1- 2011 306 357**

• **LEE Y C ET AL: "A performance Analysis of a Tightly Coupled GPS/Inertial System for Two Integrity Monitoring Methods", PROCEEDINGS OF THE INSTITUTE OF NAVIGATION (ION) GPS, XX, XX, 14 septembre 1999 (1999-09-14), pages 1187-1200, XP002382515,**

EP 4 214 532 B1

**Description**

La présente invention concerne un procédé de contrôle d'intégrité du recalage sur une pluralité d'amers.

La présente invention concerne également un produit programme d'ordinateur et un dispositif de contrôle d'intégrité associés à ce procédé.

Plus particulièrement, l'invention est applicable lors de la géolocalisation d'un dispositif mobile, notamment d'un engin mobile tel qu'un véhicule ou un aéronef, à l'aide des amers.

Par « amer », on entend tout objet naturel ou artificiel repérable par le dispositif mobile et dont la position est connue ou déterminable.

Selon des méthodes déjà connues dans l'état de la technique, il est possible de géolocaliser un dispositif mobile ou de recaler sa position déterminée par un autre moyen, en utilisant une pluralité d'amers.

Pour ce faire, le dispositif mobile est généralement apte à mesurer des directions (azimuts ou gisements) par rapport aux amers et/ou des distances jusqu'à ceux-ci. Ainsi, en analysant ces mesures et les positions connues des amers, il est possible généralement de déterminer ou de préciser la position du dispositif mobile.

Les méthodes de géolocalisation par amers restent ainsi utilisables lorsque par exemple la géolocalisation par un système GNSS (de l'anglais « Global Navigation Satellite System ») est difficile ou non-souhaitable, ou lorsque par exemple il est nécessaire de déterminer la position du dispositif mobile en utilisant plusieurs sources redondantes. En outre, en cas d'utilisation par exemple des mesures inertielles pour géolocaliser le dispositif mobile, il est possible de recaler ces mesures en utilisant la géolocalisation par amers.

Comme toutes les méthodes de géolocalisation se basant sur des mesures extérieures, la géolocalisation par amers présente un risque de perte d'intégrité. Cette perte d'intégrité est notamment due aux erreurs et bruits accumulées lors de la prise des mesures, et conduit généralement à une géolocalisation erronée du dispositif mobile.

Toutefois, contrairement par exemple aux méthodes de géolocalisation par satellites GNSS, les méthodes de géolocalisation par amers connues ne contrôlent pas l'intégrité de la solution fournie. Ainsi, une telle solution peut comporter des erreurs qui ne seront pas détectées lors la mise en oeuvre de ces méthodes.

On connait également des méthodes de contrôle d'intégrité décrites par exemple dans US 2011/306357 A1, EP 2 299 287 ou LEE Y C. et al. « A performance Analysis of a Tightly Coupled GPS/Inertial System for Two Integrity Monitoring Methods ».

La présente invention a pour but de proposer une méthode permettant de contrôler l'intégrité des mesures utilisées lors de la géolocalisation d'un dispositif mobile par amers et en cas d'une perte d'intégrité, en avertir l'opérateur exploitant le dispositif mobile ou tout autre système.

À cet effet, l'invention a pour objet un procédé de contrôle d'intégrité, conforme à la revendication 1.

Suivant d'autres aspects avantageux de l'invention, le procédé de contrôle d'intégrité comprend des caractéristiques des revendications 2 à 11.

La présente invention a également pour objet un produit programme d'ordinateur comportant des instructions logicielles qui, lorsque mises en oeuvre par un équipement informatique, mettent en oeuvre le procédé tel que défini précédemment.

La présente invention a également pour objet un dispositif de contrôle d'intégrité du recalage sur une pluralité d'amers lors de géolocalisation d'un dispositif mobile suite à une ou plusieurs défaillances de types prédéterminés, comprenant des moyens techniques adaptés pour mettre en oeuvre le procédé tel que défini précédemment.

Ces caractéristiques et avantages de l'invention apparaitront à la lecture de la description qui va suivre, donnée uniquement à titre d'exemple non limitatif, et faite en référence aux dessins annexés, sur lesquels :

- [Fig 1] la figure 1 est une vue schématique d'un système de géolocalisation par amers d'un dispositif mobile, le système de géolocalisation comprenant un dispositif de contrôle d'intégrité selon l'invention ;
- [Fig 2] la figure 2 est une vue schématique du dispositif de contrôle d'intégrité de la figure 1 ; et
- [Fig 3] la figure 3 est un organigramme d'un procédé de contrôle d'intégrité selon l'invention, le procédé étant mis en oeuvre par le dispositif de contrôle d'intégrité de la figure 1.

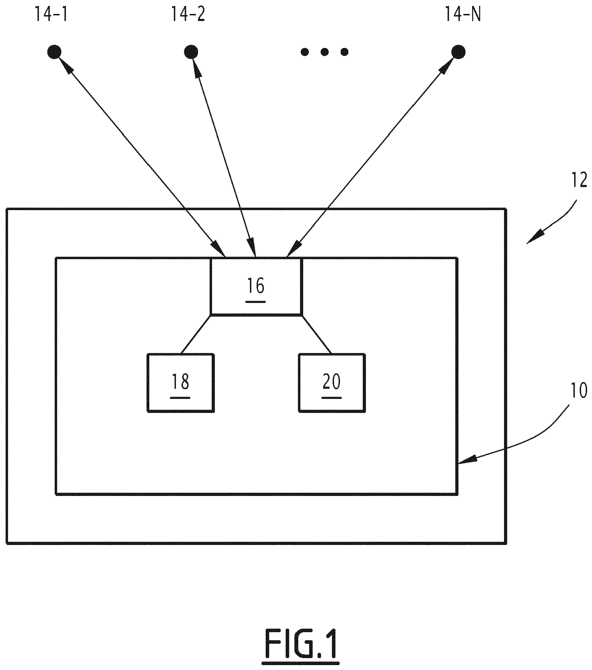

On a en effet représenté sur la figure 1, un système de géolocalisation 10 par amers d'un dispositif mobile 12. Le dispositif mobile 12 est apte à se déplacer par exemple selon deux ou trois degrés de liberté par exemple dans un repère terrestre.

Selon un exemple de réalisation, le dispositif mobile 12 est un engin mobile, tel que par exemple un véhicule terrestre ou un aéronef, embarquant le système de géolocalisation 10. Dans le cas d'un aéronef, il peut s'agir d'un avion ou d'un hélicoptère pilotable par un opérateur et/ou par un système avionique à partir de celui-ci, ou d'un drone pilotable à partir d'un centre de contrôle distant par un opérateur et/ou par un système avionique adapté.

Selon un autre exemple de réalisation, le dispositif mobile 12 est porté par un opérateur ou par tout autre utilisateur et présente par exemple un téléphone portable. Dans ce cas, le système de géolocalisation 10 est par exemple intégré dans le dispositif mobile 12.

Le système de géolocalisation 10 est apte à déterminer la position du dispositif mobile 12 en utilisant notamment *N* amers 14-1,...,14-N.

Chaque amer 14-1,...,14-N présente un objet naturel ou artificiel disposé par exemple de manière fixe sur la surface terrestre selon une position connue avec une précision également connue et repérable depuis le dispositif mobile 12. Ainsi, chaque amer présente par exemple un pylône, une éolienne, un phare, un bâtiment, une montagne, un rocher, etc.

Chaque amer 14-1,...,14-N est par exemple identifiable par un identifiant qui lui est propre. En outre, selon un mode de réalisation particulier de l'invention, l'identifiant de chaque amer 14-1,...,14-N permet d'obtenir sa position en utilisant par exemple une base de données de positions prévue à cet effet. Une telle base de données peut être publiquement accessible ou alors, présenter un accès restreint.

En référence à la figure 1, le système de géolocalisation 10 comprend une pluralité de capteurs 16, un dispositif de traitement 18 et un dispositif de contrôle d'intégrité 20.

Les capteurs 16 sont aptes à déterminer des données de mesure en relation avec chacun des amers 14-1,...,14-N.

Avantageusement selon l'invention, chaque mesure déterminée par les capteurs 16 correspond à l'un de type de mesure choisi dans le groupe :

- mesure de position ;
- mesure de direction ;
- mesure de distance.

En particulier, chaque mesure de position correspond à une mesure de position bidimensionnelle ou tridimensionnelles de l'un des amers 14-1,...,14-N. Une telle mesure est par exemple déterminée par l'un des capteurs 16 en déterminant l'identifiant de l'amer correspondant et en identifiant la position correspondant à cet identifiant dans la base de données de positions définie ci-dessus. Dans ce cas, le capteur correspondant se présente par exemple sous la forme d'un capteur d'images associé à une unité de traitement apte à accéder à la base de données de positions. Selon un autre exemple de réalisation, l'indentification d'au moins certains des amers s'effectue manuellement par l'opérateur. Dans ce cas, l'opérateur peut par exemple introduire manuellement l'identifiant de l'amer correspondant ou alors sa position dans le dispositif de contrôle d'intégrité 20.

Selon un autre exemple de réalisation, la position d'au moins l'un des amers 14-1,...,14-N est déterminée en utilisant des informations transmises par l'amer lui-même en utilisant par exemple des signaux radioélectriques.

Chaque mesure de direction correspond à une mesure d'azimut ou à une mesure de site ou à une mesure de gisement relative à l'un des amers 14-1,...,14-N. Une telle mesure est par exemple déterminée par l'un des capteurs 16 en utilisant des mesures optiques et dans le cas d'une mesure d'azimut, en comparant ces mesures avec le cap du dispositif mobile 12 ou avec une direction fixe dans l'espace.

Chaque mesure de distance correspond à une mesure de distance entre le dispositif mobile 12 et l'un des amers 14-1,...,14-N. Une telle mesure est réalisée par l'un des capteurs 16 comprenant par exemple un radar ou un laser ou tout autre dispositif de télémétrie connu en soi.

Le dispositif de traitement 18 est connecté aux capteurs 16 et apte à analyser l'ensemble des mesures fournies par ces capteurs 16 pour déterminer la position du dispositif mobile 10 en mettant en oeuvre une méthode de géolocalisation. Une telle méthode de géolocalisation est connue en soi et ne sera pas décrite en détail par la suite.

Selon un autre exemple de réalisation, le dispositif de traitement 18 est apte à déterminer ou à préciser la position du dispositif mobile 10 en utilisant en outre des données issues d'autres systèmes, comme par exemple un système de géolocalisation par satellites (système GNSS), selon des méthodes également connues en soi.

Le dispositif de traitement 18 est connecté en outre à un écran permettant par exemple d'afficher la position déterminée. Selon un autre exemple de réalisation, le dispositif de traitement 18 est connecté à tout autre système apte à utiliser la position déterminée pour par exemple piloter le dispositif mobile 10 lorsqu'il présente un engin mobile.

Le dispositif de contrôle d'intégrité 20 permet de contrôler l'intégrité de la position fournie par le dispositif de traitement 18, en mettant en oeuvre le procédé de contrôle d'intégrité selon l'invention.

En particulier, le dispositif de contrôle d'intégrité 20 est apte détecter une perte d'intégrité de la position fournie par le dispositif de traitement 18, suite à une ou plusieurs défaillances de types prédéterminés.

Chaque type de défaillance est choisi dans le groupe comprenant :

- biais scalaire identique sur toutes les mesures de direction (résultant par exemple de l'apparition d'un biais sur le cap) ;
- biais scalaire identique sur toutes les mesures de distance (résultant par exemple d'un biais occasionné par un défaut de fonctionnement du capteur de télémétrie) ;
- biais vectoriel sur les mesures de position d'au moins un amer (résultant par exemple d'une erreur de déréférencent de l'amer).

Pour identifier chaque type de défaillance par la suite, l'indice *j* variant de 1 à 3 est associé à chaque type de défaillance. Lorsque *j* = 1, il s'agit d'un biais scalaire identique sur toutes les mesures de direction. Lorsque *j* = 2, il s'agit d'un biais scalaire identique sur toutes les mesures de distance. Lorsque *j* = 3, il s'agit d'un biais vectoriel sur les mesures de position d'au moins un amer.

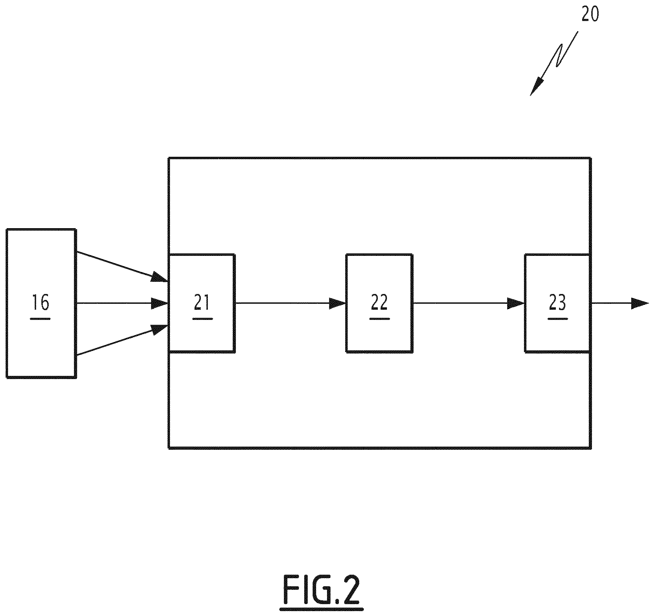

En référence à la figure 2, le dispositif de contrôle d'intégrité 20 comprend un module d'entrée 21, un module de calcul 22 et un module de sortie 23.

Le module d'entrée 21 est connecté aux capteurs 16 et est apte à acquérir l'ensemble des mesures déterminées par ces capteurs 16. Le module d'entrée 16 est apte en outre à acquérir des paramètres de contrôle présentant des valeurs de paramétrage du procédé de contrôle d'intégrité.

Selon un exemple de réalisation, ces paramètres de contrôle comprennent :

- une première valeur de probabilité $P_d$ correspondant à la probabilité de détection d'une défaillance de l'un des types prédéterminés, la valeur 1 - $P_d$ signifiant donc le risque de perte d'intégrité ;
- une deuxième valeur de probabilité $P_{fa}$ correspondant à la probabilité d'une fausse alerte signifiant une perte d'intégrité ;
- un seuil de protection *VAL* signifiant un rayon de protection maximal dans lequel l'intégrité est garantie avec la première valeur de probabilité $P_d$ en absence d'une fausse alerte avec la deuxième valeur de probabilité $P_{fa}$.

Les paramètres de contrôle sont par exemple transmis au module d'entrée 21 via une interface homme-machine ou par tout autre système connecté à ce module.

Le module de calcul 22 est apte à analyser les données acquises par le module d'entrée 21 afin de fournir un résultat de contrôle d'intégrité de la position déterminée par le dispositif de traitement 18, comme cela sera expliqué plus en détail par la suite.

Enfin, le module de sortie 23 est apte à fournir le résultat de contrôle d'intégrité à tout système intéressé. Par exemple, lorsque la position du dispositif mobile 10 est affichée sur un écran, le module de sortie 23 est apte afficher sur le même écran un indicateur d'intégrité de cette position. En variante ou en complément, le module de sortie 23 est apte à lever une alerte en cas d'une perte d'intégrité.

Chacun des modules 21 à 23 se présente par exemple sous la forme d'un logiciel mis en oeuvre par un processeur adapté. En variante, au moins l'un de ces modules 21 à 23 se présente au moins partiellement sous la forme d'un circuit logique programmable, tel qu'un circuit de type FPGA (de l'anglais « Field Programmable Gate Array »).

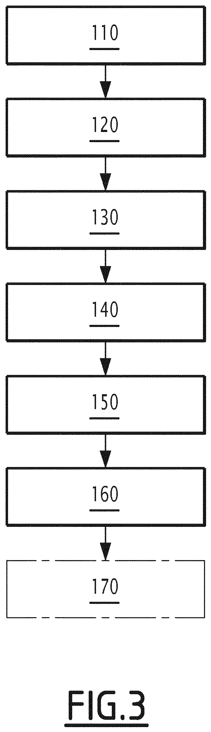

Le procédé de contrôle d'intégrité sera désormais expliqué en référence à la figure 3 présentant un organigramme de ses étapes.

Initialement, il est considéré que le dispositif mobile 10 se déplace dans l'espace par exemple selon deux degrés de liberté à proximité des *N* amers 14-1,...,14-N dont les positions bidimensionnelles sont connues. Il est également considéré que les capteurs 16 déterminent l'ensemble des mesures relatives à ces amers, telles que définies précédemment, et que le dispositif de traitement 18 détermine la position du dispositif mobile 10 en utilisant ces mesures.

Lors de l'étape initiale 110, le module d'entrée 21 acquiert l'ensemble des mesures déterminées par les capteurs 16 ainsi que les paramètres de contrôle, tels que définis précédemment.

En particulier, il est considéré par la suite que le module d'entrée 21 acquiert *M* mesures. Dans ce cas, le nombre *M* est déterminé selon l'expression suivante :

$$2N + N_a + N_r + 2N_{ar},$$

où

$N$ est le nombre d'amers et donc le nombre de positions bidimensionnelles de ces amers 14-1,...,14-N ;
$N_a$ est le nombre de mesures de direction (par exemple des mesures d'azimut) des amers 14-1,...,14-N distincts ; et
$N_r$ est le nombre de mesures de distance jusqu'aux amers 14-1,...,14-N distincts ;
$N_{ar}$ est le nombre de mesures conjointes, c'est-à-dire le nombre à la fois de mesures de direction et de mesures de distance sur un même amer 14-1,...,14-N.

À la fin de l'étape 110, le module d'entrée 21 transmet l'ensemble des données acquises au module de calcul 22.

Lors de l'étape suivante 120, le module de calcul 22 estime un vecteur d'état *X* pour obtenir un vecteur d'état estimé $\hat{X}$ à partir d'un vecteur de mesures *Y*.

Cette estimation est faite en utilisant un modèle linéarisé selon lequel :

$$Y = HX + B + \varepsilon,$$

avec

$$Y = \begin{bmatrix} Y_a \\ Y_r \\ Y_p \end{bmatrix} \quad H = \begin{bmatrix} H_a \\ H_r \\ H_p \end{bmatrix} \quad \varepsilon = \begin{bmatrix} \varepsilon_a \\ \varepsilon_r \\ \varepsilon_p \end{bmatrix} \quad X = \begin{bmatrix} x \\ y \\ x_1 \\ y_1 \\ \vdots \\ x_N \\ y_N \end{bmatrix}$$

où

$B$ est un biais produit par une défaillance (de l'un des types prédéterminés) ;
$Y_a$ sont les mesures de direction ;
$Y_r$ sont les mesures de distance ;
$Y_p$ sont les mesures de position ;
$H$ est une matrice jacobienne ;
$\varepsilon$ est un bruit aléatoire supposé être un vecteur aléatoire gaussien ;
$(x, y)$ est la position bidimensionnelle du dispositif mobile 12 ;
$(x_1, y_1), \dots , (x_N, y_N)$ sont des postions bidimensionnelles des amers 14-1,...,14-N.

Le vecteur d'état estimé $\hat{X}$ est déterminé par application d'un estimateur du maximum de vraisemblance au modèle linéarisée et se présente sous la forme suivante :

$$\hat{X} = (H^t \Gamma_\varepsilon^{-1} H)^{-1} H^t \Gamma_\varepsilon^{-1} Y = H^* Y \ ;$$

$$\Gamma_{\hat{X}} = (H^t \Gamma_\varepsilon^{-1} H)^{-1}$$

où

$$\Gamma_\varepsilon = \begin{bmatrix} \Gamma_a & 0 & 0 \\ 0 & \Gamma_r & 0 \\ 0 & 0 & \Gamma_p \end{bmatrix} = \begin{bmatrix} \sigma_a^2 I_a & 0 & 0 \\ 0 & \sigma_r^2 I_r & 0 \\ 0 & 0 & \sigma_p^2 I_p \end{bmatrix}$$

$H^* = (H^t \Gamma_\varepsilon^{-1} H)^{-1} H^t \Gamma_\varepsilon^{-1}$ est une matrice pseudo-inverse pondérée de $H$ ($H^*H = I$) ;
$\Gamma_\varepsilon$ est une matrice de covariance des mesures ;
$\sigma_p$ est l'écart-type des mesures de position ;
$\sigma_r$ est l'écart-type des mesures de distance ; et
$\sigma_a$ est l'écart-type des mesures de direction.

Lors de l'étape suivante 130, le module de calcul 22 détermine une variable de test $T$ correspondant à une distance entre le vecteur de mesures $Y$ et des mesures théoriques $H\hat{X}$ associées au vecteur d'état estimé $\hat{X}$. La variable de test $T$ dépend du bruit $\varepsilon$ ainsi que du biais $B$.
Dans l'exemple décrit, ladite distance est le carré de la distance de Mahalanobis déterminée selon l'expression suivante :

$$T(\varepsilon + B) = \Delta Y^t . \ \Gamma_m^{-1} \Delta Y$$

où

$\Delta Y$ est le vecteur des résidus linéarisés égal à

$$Y - H\hat{X} = Y - HH^*Y = (I - HH^*)Y = (I - HH^*)(\varepsilon + B).$$

Ainsi, la variable de test T prend la forme suivante :

$$T(\varepsilon + B) = Y^t G Y = (\varepsilon + B)^t G (\varepsilon + B)$$

où

$$G = (I - HH^*)^t \Gamma_\varepsilon^{-1} (I - HH^*).$$

La variable de test $T$ suit une loi de distribution prédéterminée qui, dans l'exemple décrit, est la loi $\chi^2$ à $K$ degrés de liberté et décentrée selon une valeur de décentralisation $\lambda$.

Le nombre $K$ est égal à $M - 2(N + 1)$.

L'espérance mathématique de la variable de test $T$ est $E(T) = K + \lambda$ avec $\lambda = T(B)$.

Lors de l'étape 140 suivante, le module de calcul 22 détermine la valeur de décentralisation $\lambda$ de la loi de distribution pour les première et deuxième valeurs de probabilité.

Pour cela, le module de calcul 22 détermine d'abord un seuil d'alerte en intégrité $s^2$ à partir de la deuxième valeur de probabilité $P_{fa}$ et du nombre $K$ et en utilisant la fonction de répartition $F_{\chi 2}$ de ladite loi de distribution.

En particulier,

$$F_{\chi^2}(s^2, K) = 1 - P_{fa}$$

et

$$s = \sqrt{F_{\chi^2}^{-1}\big(1 - P_{fa}, K\big)}.$$

Puis, le module de calcul 22 détermine la valeur de décentralisation $\lambda$ à partir de la première valeur de probabilité $P_d$, du nombre $K$, du seuil d'alerte en intégrité $s^2$ et en utilisant la fonction de répartition de ladite loi de distribution.

En particulier,

$$\lambda = F_{\chi^2}^{-1}(s^2, K, 1 - P_d).$$

Lors de l'étape 150 suivante, pour chaque type de défaillance $j$ et chaque mesure $i$, le module de calcul 22 détermine un biais minimum détectable $B_{min,i,j}$ à partir de la valeur de décentralisation $\lambda$, de la variable de test $T$ et d'un vecteur caractéristique associé à ce type de défaillance.

Lorsque $j = 1$ ou $2$, il s'agit d'un biais minimum détectable scalaire $B_{min,i,j}$ qui est déterminé en résolvant l'équation

$$T\big(B_{min,i,j}\big) = \lambda$$

en utilisant une méthode connue en soi, comme par exemple la méthode de résolution par dichotomie.

Dans ce cas, lors d'une défaillance de type $j$, le biais minimum détectable scalaire $B_{min,i,j}$ sur une mesure $i$ peut être exprimé sous la forme suivante :

$$B_{min,i,j} = \left( \sqrt{\frac{\lambda}{W_{i,j}^t G W_{i,j}}} \right) W_{i,j}$$

où $W_{i,j}$ le vecteur binaire caractéristique associé au type de défaillance $j$ pour une mesure $i$.

Lors d'une défaillance avec un biais inferieur à $B_{min,i,j}$, l'erreur maximale de position a pour expression :

$$\Delta X_{max,i} = H^* B_{min,i,j}$$

Lorsque $j = 3$, il s'agit d'un biais minimum détectable vectoriel $B_{min,i,j}$.

Ce biais sur la mesure de position $i$ peut être considéré comme une somme pondérée d'un biais $b_{xi}$ sur l'abscisse $x$ et d'un biais $b_{yi}$ sur l'ordonnée $y$.

Ce biais $B_{min,i,j}$ peut être alors identifié en utilisant l'expression suivante :

$$B_{min,i,j} = b_x W_{x,i,j} + b_y W_{y,i,j}$$

où $W_{x,i,j}$ et $W_{y,i,j}$ sont des vecteurs caractéristique pour respectivement l'abscisse $x$ et l'ordonnée $y$.

Les biais $b_{xi}$ et $b_{yi}$ peuvent être déterminés en utilisant, tout comme dans le cas précédent, l'expression :

$$T\left(B_{min,i,j}\right) = B^t G B = \lambda.$$

En particulier, le biais $b_{yi}$ peut être identifié en fonction du biais $b_{xi}$ par l'expression suivante :

$$b_{yi} = \frac{-G(x_i, y_i) b_{xi} \pm \sqrt{G(x_i, y_i)^2 b_{xi}^2 - G(y_i, y_i)\left(b_{xi}^2 G(x_i, x_i) - \lambda\right)}}{G(y_i, y_i)}$$

où

$G(x_i, y_i)$ est l'élément de la matrice $G$ associé en ligne à la valeur $x_i$ et en colonne à la valeur $y_i$ ;

$G(x_i, x_i)$ est l'élément de la matrice $G$ associé en ligne à la valeur $x_i$ et en colonne à la valeur $x_i$ ;

$G(y_i, y_i)$ est l'élément de la matrice $G$ associé en ligne à la valeur $y_i$ et en colonne à la valeur $y_i$.

$$B_{min,i,j} = \begin{bmatrix} b_{xi} \\ b_{yi} \end{bmatrix}$$

Le biais vectoriel minimum détectable de la mesure de position $i$ qui impacte le plus fortement l'estimation peut être déterminé en recherchant le biais $b_{xi}$ qui maximise le biais d'estimation $|\Delta X_{i,j}|$ avec $\Delta X_{i,j}(b_{xi}) = H^* B_i = b_{xi} H^* W_{x,i,j} + b_{yi} H^* W_{y,i,j}$ :

$$b_{xi} = \max_{b_{xi}}\left(\Delta X_{i,j}(b_{xi})\right) \ \text{ avec } 0 \leq b_{xi} \leq \left(\sqrt{\frac{\lambda}{W_{x,i,j}^t G W_{x,i,j}}}\right) W_{x,i,j}$$

$b_{yi}$ étant ensuite déterminé selon la formule précédente.

Lors de l'étape suivante 160, le module de calcul 22 détermine un rayon de protection *HPL* dans lequel l'intégrité est garantie avec la première valeur de probabilité $P_d$ en absence d'une fausse alerte avec la deuxième valeur de probabilité $P_{fa}$.

Ce rayon est déterminé selon l'expression suivante :

$$HPL \approx \max_{i,j}\left(\sqrt{\sqrt{\left(H^* B_{min,i,j}(x)\right)^2 + \left(H^* B_{min,i,j}(y)\right)^2}}\right)$$

où

$H - B_{min,i,j}(x)$ est la projection du biais minimal détectable (pour la mesure $i$ lors de la défaillance de type $j$) sur l'abscisse de l'estimateur de position ;

$H * B_{min,i,j}(y)$ est la projection du biais minimal détectable sur l'ordonnée.

À la fin de cette étape 160, le module de calcul 22 transmet au module de sortie 23 la valeur *HPL* qui l'affiche par exemple sur l'écran correspondant et la transmet à tout autre système intéressé.

Lors de l'étape suivante 170 optionnelle, le module de calcul 22 déclenche une alerte lorsque le rayon de protection *HPL* dépasse le seuil de protection *VAL* ou lorsque la valeur de décentralisation $\lambda$ dépasse le seuil d'alerte en intégrité $s^2$.

Dans ce cas, la solution fournie par le dispositif de traitement 18 n'est alors plus considérée comme intègre.

Les biais $b_{xi}$ et $b_{yi}$ peuvent être déterminés en utilisant, tout comme dans le cas précédent, l'expression :

$$T\left(B_{min,i,j}\right) = B^t G B = \lambda.$$

En particulier, le biais $b_{yi}$ peut être identifié en fonction du biais $b_{xi}$ par l'expression suivante :

$$b_{yi} = \frac{-G(x_i, y_i)b_{xi} \pm \sqrt{G(x_i, y_i)^2 b_{xi}^2 - G(y_i, y_i)\left(b_{xi}^2 G(x_i, x_i) - \lambda\right)}}{G(y_i, y_i)}$$

où

$G(x_i, y_i)$ est l'élément de la matrice *G* associé en ligne à la valeur $x_i$ et en colonne à la valeur $y_i$ ;

$G(x_i, x_i)$ est l'élément de la matrice *G* associé en ligne à la valeur $x_i$ et en colonne à la valeur $x_i$ ;

$G(y_i, y_i)$ est l'élément de la matrice *G* associé en ligne à la valeur $y_i$ et en colonne à la valeur $y_i$.

Le biais vectoriel minimum détectable $B_{min,i,j} = \begin{bmatrix} b_{xi} \\ b_{yi} \end{bmatrix}$ de la mesure de position *i* qui impacte le plus fortement l'estimation peut être déterminé en recherchant le biais $b_{xi}$ qui maximise le biais d'estimation $|\Delta X_{i,j}|$ avec $\Delta X_{i,j}(b_{xi}) = H^*B_i = b_{xi}H^*W_{x,i,j} + b_{yi}H^*W_{y,i,j}$ :

$$b_{xi} = \max_{b_{xi}}\left(\Delta X_{i,j}(b_{xi})\right) \text{ avec } 0 \leq b_{xi} \leq \left(\sqrt{\frac{\lambda}{W_{x,i,j}^t G W_{x,i,j}}}\right)W_{x,i,j}$$

$b_{yi}$ étant ensuite déterminé selon la formule précédente.

Lors de l'étape suivante 160, le module de calcul 22 détermine un rayon de protection *HPL* dans lequel l'intégrité est garantie avec la première valeur de probabilité $P_d$ en absence d'une fausse alerte avec la deuxième valeur de probabilité $P_{fa}$.

Ce rayon est déterminé selon l'expression suivante :

$$HPL \approx \max_{i,j}\left(\sqrt{\sqrt{\left(H^*B_{min,i,j}(x)\right)^2 + \left(H^*B_{min,i,j}(y)\right)^2}}\right)$$

où

$H * B_{min,i,j}(x)$ est la projection du biais minimal détectable (pour la mesure *i* lors de la défaillance de type *j*) sur l'abscisse de l'estimateur de position ;

$H * B_{min,i,j}(y)$ est la projection du biais minimal détectable sur l'ordonnée.

À la fin de cette étape 160, le module de calcul 22 transmet au module de sortie 23 la valeur *HPL* qui l'affiche par exemple sur l'écran correspondant et la transmet à tout autre système intéressé.

Lors de l'étape suivante 170 optionnelle, le module de calcul 22 déclenche une alerte lorsque le rayon de protection *HPL* dépasse le seuil de protection *VAL* ou lorsque la valeur de décentralisation $\lambda$ dépasse le seuil d'alerte en intégrité $s^2$.

Dans ce cas, la solution fournie par le dispositif de traitement 18 n'est alors plus considérée comme intègre.

## Revendications

1. Procédé de contrôle d'intégrité du recalage sur une pluralité d'amers (14-1, ..., 14-N) lors de la géolocalisation d'un dispositif mobile (12) suite à une ou plusieurs défaillances de types prédéterminés, comprenant les étapes suivantes :

   - acquisition (110) d'une première valeur de probabilité ($P_d$) correspondant à la probabilité de détection d'une défaillance et d'une deuxième valeur de probabilité *($P_{fa}$)* correspondant à la probabilité d'une fausse alerte ;
   - détermination (120) d'un vecteur d'état estimé ($\hat{X}$) à partir d'un vecteur de mesures ($Y$) comprenant des mesures de position des amers (14-1, ..., 14-N), des mesures de direction des amers (14-1, ..., 14-N) et des mesures de distance jusqu'aux amers (14-1, ..., 14-N) à partir du dispositif mobile (12) ;
   - détermination (130) d'une variable de test ($T$) correspondant à une distance entre le vecteur de mesures ($Y$) et des mesures théoriques associées au vecteur d'état estimé ($\hat{X}$), la variable de test ($T$) suivant une loi de distribution prédéterminée ;
   - détermination (140) d'une valeur de décentralisation ($\lambda$) de la loi de distribution pour les première et deuxième valeurs de probabilité ($P_d$, $P_{fa}$) ;
   - pour le ou chaque type de défaillance, détermination (150) d'un biais minimum détectable ($B_{min,i,j}$) à partir de la valeur de décentralisation ($\lambda$), de la variable de test ($T$) et d'un vecteur caractéristique ($W_{i,j}$) associé à ce type de défaillance ;
   - détermination (160) d'un rayon de protection *(HPL)* à partir du ou de chaque biais minimum détectable ($B_{min,i,j}$), l'intégrité des mesures dans ledit rayon de protection *(HPL)* étant garantie avec la première valeur de probabilité ($P_d$) en absence d'une fausse alerte avec la deuxième valeur de probabilité ($P_{fa}$).

2. Procédé selon la revendication 1, dans lequel le vecteur d'état estimé ($\hat{X}$) est déterminé à partir d'un modèle linéarisé.

3. Procédé selon la revendication 2, dans lequel le vecteur d'état estimé ($\hat{X}$) est déterminé en utilisant un estimateur du maximum de vraisemblance.

4. Procédé selon l'une quelconque des revendications précédentes, dans lequel chaque type de défaillance est choisi dans le groupe comprenant :

   - biais scalaire identique sur toutes les mesures de direction ;
   - biais scalaire identique sur toutes les mesures de distance ;
   - biais vectoriel sur les mesures de position d'au moins un amer (14-1, ..., 14-N) dans un repère prédéterminé.

5. Procédé selon la revendication 4, dans lequel pour le type de défaillance correspondant au biais vectoriel sur les mesures de position d'au moins un amer (14-1, ..., 14-N), un biais minimum détectable scalaire *($b_{xi}$, $b_{yi}$)* est déterminé pour chaque axe dudit repère.

6. Procédé selon l'une quelconque des revendications précédentes, dans lequel ladite distance entre le vecteur de mesures ($Y$) et les mesures théoriques associées au vecteur d'état estimé ($\hat{X}$) est le carré de la distance de Mahalanobis.

7. Procédé selon l'une quelconque des revendications précédentes, dans lequel ladite loi de distribution prédéterminée est la loi de chi 2 avec $K$ degrés de liberté.

8. Procédé selon la revendication 7, dans lequel le nombre $K$ correspond au nombre total de mesures ($M$) diminué de $2(N - 1)$ où $N$ est le nombre d'amers (14-1, ..., 14-N).

9. Procédé selon la revendication 7 ou 8, dans lequel la détermination de la valeur de décentralisation ($\lambda$) comprend :

   - détermination d'un seuil d'alerte en intégrité ($s^2$) à partir de la deuxième valeur de probabilité *($P_{fa}$)* et du nombre $K$ et en utilisant la fonction de répartition ($F_{\chi 2}$) de ladite loi de distribution ;
   - détermination de la valeur de décentralisation ($\lambda$) à partir de la première valeur de probabilité ($P_d$), du nombre *K,* du seuil d'alerte en intégrité ($s^2$) et en utilisant la fonction de répartition ($F_{\chi 2}$) de ladite loi de distribution.

**10.** Procédé selon l'une quelconque des revendications précédentes, comprenant en outre une étape (170) de déclenchement d'une alerte lorsque le rayon de protection *(HPL)* dépasse un seuil de protection *(VAL).*

**11.** Procédé selon les revendications 9 et 10, dans lequel, lors de l'étape (170) de déclenchement d'une alerte, une alerte est déclenchée en outre lorsque la valeur de décentralisation ($\lambda$) dépasse le seuil d'alerte en intégrité ($s^2$).

**12.** Produit programme d'ordinateur comportant des instructions logicielles qui, lorsque mises en oeuvre par un équipement informatique, mettent en oeuvre le procédé selon l'une quelconque des revendications précédentes.

**13.** Dispositif de contrôle d'intégrité (20) du recalage sur une pluralité d'amers (14-1, ..., 14-N) lors de la géolocalisation d'un dispositif mobile (12) suite à une ou plusieurs défaillances de types prédéterminés, comprenant des moyens techniques (21, 22, 23) adaptés pour mettre en oeuvre le procédé selon l'une quelconque des revendications 1 à 11.

**Patentansprüche**

**1.** Verfahren zur Integritätskontrolle der Neuausrichtung auf eine Vielzahl von Landmarken (14-1, ..., 14-N) bei der Geolokalisierung einer mobilen Vorrichtung (12) nach einem oder mehreren Fehlern vorbestimmter Typen, das die folgenden Schritte umfasst:

- Erfassen (110) eines ersten Wahrscheinlichkeitswerts ($P_d$), der der Wahrscheinlichkeit der Erkennung eines Fehlers entspricht, und eines zweiten Wahrscheinlichkeitswerts ($P_{fa}$), der der Wahrscheinlichkeit eines Fehlalarms entspricht;
- Bestimmen (120) eines geschätzten Zustandsvektors ($\hat{X}$) aus einem Messvektor ($Y$), der Messungen der Position der Landmarken (14-1, ..., 14-N), Messungen der Richtung der Landmarken (14-1, ..., 14-N) und Messungen der Entfernung zu den Landmarken (14-1, ..., 14-N) von der mobilen Vorrichtung (12) enthält;
- Bestimmen (130) einer Testvariablen ($T$), die einem Abstand zwischen dem Messvektor ($Y$) und theoretischen Messungen entspricht, die mit dem geschätzten Zustandsvektor ($\hat{X}$) verknüpft sind, wobei die Testvariable ($T$) einem vorbestimmten Verteilungsgesetz folgt;
- Bestimmen (140) eines Dezentralisierungswerts ($\lambda$) des Verteilungsgesetzes für den ersten und zweiten Wahrscheinlichkeitswert ($P_d$, $P_{fa}$);
- für den oder jeden Fehlertyp, Bestimmen (150) einer minimal erfassbaren Verzerrung ($B_{min,i,j}$) aus dem Dezentralisierungswert ($\lambda$), der Testvariablen ($T$) und einem charakteristischen Vektor ($W_{i,j}$), der mit diesem Fehlertyp verbunden ist;
- Bestimmen (160) eines Schutzradius *(HPL)* aus der oder jeder minimal detektierbaren Verzerrung ($B_{min,i,j}$), wobei die Integrität der Messungen in dem Schutzradius *(HPL)* in Abwesenheit eines Fehlalarms mit dem zweiten Wahrscheinlichkeitswert *(P_{fa})* durch den ersten Wahrscheinlichkeitswert *(Pd)* gewährleistet ist.

**2.** Verfahren nach Anspruch 1, wobei der geschätzte Zustandsvektor ($\hat{X}$) aus einem linearisierten Modell bestimmt wird.

**3.** Verfahren nach Anspruch 2, wobei der geschätzte Zustandsvektor ($\hat{X}$) unter Verwendung eines Maximum-Likelihood-Schätzers bestimmt wird.

**4.** Verfahren nach einem der vorhergehenden Ansprüche, wobei jeder Fehlertyp aus der Gruppe ausgewählt ist, die Folgendes umfasst:

- identische skalare Verzerrung bei allen Richtungsmessungen;
- identische skalare Verzerrung bei allen Entfernungsmessungen;
- Vektorverzerrung bei den Positionsmessungen von mindestens einer Landmarke (14-1, ..., 14-N) in einem vorbestimmten Koordinatensystem.

**5.** Verfahren nach Anspruch 4, wobei für den Fehlertyp, der der Vektorverzerrung an den Positionsmessungen von mindestens einer Landmarke (14-1, ..., 14-N) entspricht, eine minimale skalar erfassbare Verzerrung ($b_{xi}$, $b_{yi}$) für jede Achse des Koordinatensystems bestimmt wird.

**6.** Verfahren nach einem der vorhergehenden Ansprüche, wobei der Abstand zwischen dem Messvektor ($Y$) und den theoretischen Messungen, die mit dem geschätzten Zustandsvektor ($\hat{X}$) verknüpft sind, das Quadrat der Mahalanobis-Distanz ist.

7. Verfahren nach einem der vorhergehenden Ansprüche, wobei das vorbestimmte Verteilungsgesetz das Chi-2-Gesetz mit $K$ Freiheitsgraden ist.

8. Verfahren nach Anspruch 7, wobei die Anzahl $K$ der Gesamtzahl der Messungen ($M$) abzüglich 2($N$-1) entspricht, wobei $N$ die Anzahl der Landmarken (14-1, ..., 14-N) ist.

9. Verfahren nach Anspruch 7 oder 8, wobei die Bestimmung des Dezentralisierungswerts ($\lambda$) Folgendes umfasst:

- Bestimmen einer Integritätswarnschwelle ($s^2$) aus dem zweiten Wahrscheinlichkeitswert ($P_{fa}$) und der Zahl $K$ und unter Verwendung der Verteilungsfunktion ($F_{\chi2}$) des genannten Verteilungsgesetzes;
- Bestimmen des Dezentralisierungswerts ($\lambda$) aus dem ersten Wahrscheinlichkeitswert ($P_d$), der Zahl $K$, der Integritätswarnschwelle ($s^2$) und unter Verwendung der Verteilungsfunktion ($F_{\chi2}$) des genannten Verteilungsgesetzes.

10. Verfahren nach einem der vorhergehenden Ansprüche, das außerdem einen Schritt (170) zum Auslösen eines Alarms umfasst, wenn der Schutzradius *(HPL)* einen Schutzschwellenwert (*VAL*) überschreitet.

11. Verfahren nach Anspruch 9 und 10, wobei in dem Schritt (170) zum Auslösen einer Warnung zusätzlich eine Warnung ausgelöst wird, wenn der Dezentralisierungswert ($\lambda$) die Integritätswarnschwelle ($s^2$) überschreitet.

12. Computerprogrammprodukt, umfassend Softwareanweisungen, die, wenn sie von einer Rechenvorrichtung implementiert werden, das Verfahren nach einem der vorherigen Ansprüche implementieren.

13. Vorrichtung zur Integritätskontrolle (20) der Neuausrichtung an einer Vielzahl von Landmarken (14-1, ..., 14-N) bei der Geolokalisierung eines mobilen Geräts (12), mit technischen Mitteln (21, 22, 23), die zur Durchführung des Verfahrens nach einem der Ansprüche 1 bis 11 geeignet sind.

## Claims

1. A method for checking the integrity of the alignment on a plurality of landmarks (14-1,...,14-N) during the geolocation of a mobile device (12) following one or more faults of predetermined types, comprising the following steps:

- acquisition (110) of a first probability value ($P_d$) corresponding to the probability of detection of a fault and of a second probability value ($P_{fa}$) corresponding to the probability of a false alarm;
- determination (120) of an estimated state vector ($\hat{X}$) from a vector of measurements ($Y$) comprising measurements of the position of the landmarks (14-1, ..., 14-N), measurements direction of the landmarks (14-1, ..., 14-N) and measurements of the distance to the landmarks (14-1, ..., 14-N) from the mobile device (12);
- determination (130) of a test variable ($T$) corresponding to a distance between the vector of measurements ($Y$) and theoretical measurements associated with the estimated state vector ($\hat{X}$), the test variable ($T$) following a predetermined distribution law;
- determination (140) of a decentralisation value ($\lambda$) of the distribution law for the first and second probability values $(P_d, P_{fa})$;
- for the or each type of failure, determination (150) of a minimum detectable bias ($B_{min,i,j}$) from the decentralisation value ($\lambda$), the test variable ($T$) and a characteristic vector ($W_{i,j}$) associated with this type of failure;
- determination (160) of a protection radius *(HPL)* from the or each minimum detectable bias ($B_{min,i,j}$), the integrity of the measurements in the said protection radius *(HPL)* being guaranteed with the first probability value ($P_d$) in the absence of a false alarm with the second probability value ($P_{fa}$).

2. A method according to claim 1, wherein the estimated state vector ($\hat{X}$) is determined from a linearised model.

3. The method of claim 2, wherein the estimated state vector ($\hat{X}$) is determined using a maximum likelihood estimator.

4. A method according to any one of the preceding claims, wherein each type of failure is selected from the group comprising:

- identical scalar bias on all direction measurements;
- identical scalar bias on all distance measurements;
- vector bias on the position measurements of at least one bit (14-1, ..., 14-N) in a predetermined reference frame.

5. A method according to claim 4, wherein for the type of failure corresponding to the vector bias on the position measurements of at least one bit (14-1, ..., 14-N), a scalar minimum detectable bias ($b_{xi}$, $b_{yi}$) is determined for each axis of said reference frame.

6. A method according to any one of the preceding claims, wherein said distance between the vector of measurements ($Y$) and the theoretical measurements associated with the estimated state vector ($\hat{X}$) is the square of the Mahalanobis distance.

7. A method according to any one of the preceding claims, wherein said predetermined distribution law is the chi 2 law with $K$ degrees of freedom.

8. A method according to claim 7, in which the number $K$ corresponds to the total number of measurements ($M$) minus $2(N-1)$, where $N$ is the number of landmarks (14-1, ..., 14-N).

9. A method according to claim 7 or 8, wherein determining the decentralisation value ($\lambda$) comprises:

   - determination of an integrity alert threshold ($s^2$) on the basis of the second probability value ($P_{fa}$) and the number $K$ and using the distribution function ($F_{\chi2}$) of said distribution law;
   - determination of the decentralisation value ($\lambda$) from the first probability value ($P_d$), the number $K$, the integrity alert threshold ($s^2$) and using the distribution function ($F_{\chi2}$) of said distribution law.

10. A method according to any one of the preceding claims, further comprising a step (170) of triggering an alert when the protection radius *(HPL)* exceeds a protection threshold (*VAL*).

11. A method according to claims 9 and 10, in which, during the step (170) of triggering an alert, an alert is additionally triggered when the decentralisation value ($\lambda$) exceeds the integrity alert threshold ($s^2$).

12. A computer program product comprising software instructions, which, when carried out by a computing device, implement the method according to any one of the preceding claims.

13. Device (20) for checking the integrity of the alignment on a plurality of landmarks (14-1, ..., 14-N) during the geolocation of a mobile device (12) following one or more failures of predetermined types, comprising technical means (21, 22, 23) adapted to implement the method according to any one of claims 1 to 11.

## FIG.1

FIG.2

**FIG.3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011306357 A1

- EP 2299287 A, LEE Y C.